# EUROPÄISCHE PATENTANMELDUNG

(11) **EP 1 496 073 A1**
(43) Veröffentlichungstag der Anmeldung: **12.01.2005**
(21) Anmeldenummer: 03015338.1
(22) Anmeldetag: 08.07.2003
(51) Int. Cl.: C08G 18/28, C08G 18/80, C08G 18/32, D06M 15/277

(54) **Extender für die Behandlung von Fasermaterialien**

(71) Anmelder: Ciba Spezialitätenchemie Pfersee GmbH, 86462 Langweid a.Lech (DE)
(72) Erfinder: Moors, Rolf, Dr., 86465 Welden (DE); Lüdemann, Simpert, 86399 Bobingen (DE); Artner, Wilhelm, 86568 Motzenhofen (DE); Eisele, Andreas, 86165 Augsburg (DE); Schidek, Edeltraud, 86199 Augsburg (DE); Gaugenrieder, Heinz, 86441 Zusmarshausen (DE)

(57) **Zusammenfassung**

Durch Umsetzung mehrwertiger Isocyanate mit einem Unterschuß an längerkettigen einwertigen Alkoholen, anschließende Umsetzung mit einem Unterschuß eines Ketonoxims und schließlich Umsetzung mit mehrwertigen Alkoholen oder Aminoalkoholen lassen sich Produkte erhalten, die bei der Ausrüstung von textilen Flächengebilden als Extender eingesetzt werden können.

Die Produkte eignen sich in Form wässriger Dispersionen in Kombination mit Fluorpolymeren zur öl- und wasserabweisenden Ausrüstung. Diese Dispersionen besitzen gute Lagerstabilität.

## Beschreibung

Die Erfindung betrifft Zusammensetzungen, welche sich durch aufeinanderfolgende Umsetzung mehrwertiger Isocyanate mit einwertigen Alkoholen, Oximen und schließlich Aminen oder mehrwertigen Alkoholen herstellen lassen. Sie betrifft ferner wässrige Dispersionen, welche die erhaltenen Umsetzungsprodukte enthalten und die Verwendung dieser wässrigen Dispersionen in Kombination mit Perfluoralkylgruppen enthaltenden Polymeren zur Behandlung von Fasermaterialien.

Es ist bekannt, Fasermaterialien, insbesondere in Form textiler Flächengebilde, mit Zusammensetzungen zu behandeln, welche den Fasermaterialien öl- und wasserabweisende Eigenschaften verleihen. Hierfür werden vor allem wässrige Dispersionen verwendet, die Polymere mit Perfluoralkylgruppen (R_{F}) enthalten. Dies ist unter anderem beschrieben in der EP-A 491 248, der US 4 054 592, der US 3 968 066, EP-A 459 125, EP-A 348 350 und der EP-A 325 918.

Es ist ferner bekannt, in Kombination mit R_{F} Polymeren sogenannte "Extender" zu verwenden. Hierdurch lässt sich vielfach eine Steigerung der öl-/wasserabweisenden Eigenschaften gegenüber denen erzielen, die man ohne Extender erhalten würde. Durch die Verwendung von Extendern ist es daher häufig möglich, die eingesetzte Menge an teuren R_{F}-Polymeren zu reduzieren.

Als Extender wurden vielfach Derivate von mehrwertigen Isocyanaten eingesetzt, z.B. mit Ketonoximen reversibel blockierte (Poly)isocyanate. Dies geht unter anderem hervor aus der WO 86/02115, der EP-A 537 578 und der EP-A 872 503.

Die letztgenannte Schrift nennt ein Herstellungsverfahren für blockierte Isocyanate, die sich als Extender verwenden lassen. Hierbei werden mehrwertige Isocyanate mit mehrwertigen kurzkettigen Alkoholen zu Verbindungen umgesetzt, die noch freie NCO-Gruppen enthalten. Anschließend erfolgt deren Umsetzung mit Hydroxylgruppen enthaltenden Aminen in solchen Mengen, dass die entstehenden Produkte noch freie NCO-Gruppen enthalten. Diese werden dann durch Umsetzung mit Blockierungsmitteln, z.B. Ketonoximen, reversibel blockiert. Obwohl die nach dieser Methode hergestellten Extender eine Reihe vorteilhafter Eigenschaften aufweisen, besitzen wässrige Dispersionen bzw. wässrige Textilausrüstungsflotten, welche diese Extender enthalten, in bestimmten Fällen eine noch nicht optimale Lagerstabilität.

Die Aufgabe, welche der vorliegenden Erfindung zugrunde lag, bestand darin, Zusammensetzungen zu entwickeln, welche sich ausgezeichnet als Extender bei der öl- und wasserabweisenden Ausrüstung von Fasermaterialien mittels Polymeren mit Perfluoralkylgruppen eignen, und welche in Form wässriger Dispersionen ausgezeichnete Lagerstabilität aufweisen, auch dann, wenn die Dispersionen noch zusätzlich Polymere mit Perfluoralkylgruppen enthalten.

Die Aufgabe wurde gelöst durch eine Zusammensetzung, die herstellbar ist durch folgende, nacheinander ablaufende Verfahrensschritte:
a) Umsetzung eines fluorfreien, mehrwertigen Isocyanats mit 2 oder mehr NCO-Gruppen im Molekül oder eines Gemischs solcher Isocyanate mit einem fluorfreien einwertigen Alkohol mit 10 bis 24, vorzugsweise 12 bis 22, Kohlenstoffatomen, oder einem Gemisch solcher Alkohole, wobei pro Äquivalent OH-Gruppen des Alkohols 2 bis 10 Äquivalente, vorzugsweise 4 bis 8, an NCO-Gruppen eingesetzt werden.
b) Umsetzung des bei Schritt a) erhaltenen Produkts mit einem Ketonoxim in solchen Mengenverhältnissen, dass in dem entstehenden Produktgemisch noch freie Isocyanatgruppen vorliegen.
c) Umsetzung des bei Schritt b) erhaltenen Produktgemischs mit einem fluorfreien organischen Amin, das zwei oder drei Hydroxygruppen enthält oder einem fluorfreien mehrwertigen Alkohol oder einem Gemisch solcher Verbindungen in solchen Mengenverhältnissen, dass das entstehende Produkt im wesentlichen frei von Isocyanatgruppen ist.

Wässrige Dispersionen, welche eine solche Zusammensetzung und einen oder mehrere geeignete Dispergatoren enthalten, besitzen auch nach längerer Lagerung noch ausgezeichnete Stabilität. Dies gilt zumindest in der weitaus überwiegenden Anzahl der Fälle auch dann, wenn noch zusätzlich Polymere mit Perfluoralkylgruppen (R_{F}) in der Dispersion anwesend sind. Solche R_{F} enthaltenden Dispersionen eignen sich ausgezeichnet für die öl- und wasserabweisende Ausrüstung von Fasermaterialien. Fasermaterialien, welche mit solchen Zusammensetzungen behandelt werden können, sind vor allem textile Flächengebilde in Form von Geweben, Maschenware oder nonwovens (nichtgewebte Vliese). Bei diesen Textilausrüstungsverfahren, die nach bekannten Methoden, z.B. in Form einer Foulardierung, durchgeführt werden können, ist die hohe Stabilität der genannten, wässrigen Dispersionen ein großer Vorteil, sowohl bei der Verarbeitung der Textilien als auch was die Qualität der ausgerüsteten Ware betrifft.

Wenn jedoch in einigen seltenen Fällen, je nach Auswahl von Art und Menge der Komponenten, wässrige Dispersionen erfindungsgemäßer Zusammensetzung eine gute Stabilität bei längerer Lagerung nur dann besitzen sollten, wenn keine R_{F}-Polymeren in den Dispersionen enthalten sind, ist es von Vorteil, eine wässrige Dispersion A, welche eine erfindungsgemäße Zusammensetzung, aber kein R_{F}-Polymer enthält, erst kurz vor der Verwendung im Textilausrüstbetrieb mit einer wässrigen R_{F}-enthaltenden wässrigen Dispersion B zu vereinen. Die Kombination einer solchen ersten wässrigen Dispersion A mit einer solchen zweiten wässrigen Dispersion B ist gut geeignet für die Ausrüstung von Textilien. Die beiden Dispersionen können in den meisten Fällen schon beim Hersteller vereinigt werden und müssen im Textilausrüstbetrieb dann nur noch auf Gebrauchs- (Flotten-) konzentration eingestellt werden. Wenn eine wässrige Dispersion, welche eine erfindungsgemäße Zusammensetzung und ein R_{F}-Polymer enthält, gute Lagerstabilität besitzt, ist es aber vielfach auch möglich, das R_{F}-Polymer nicht in Form einer wässrigen Dispersion zu verwenden, sondern unverdünnt. Dies kann z.B. erfolgen, indem man das R_{F}-Polymer in die wässrige Dispersion einrührt, welche die erfindungsgemäße Zusammensetzung enthält. Daran kann sich gegebenenfalls eine mechanische Homogenisierung anschließen.

Die Verwendung einer wässrigen Dispersion einer erfindungsgemäßen Zusammensetzung in Kombination mit einem Polymeren, das Perfluoralkylgruppen enthält, zur Behandlung von Fasermaterialien wie z.B. Textilien, führt zu ausgezeichneten öl- und wasserabweisenden Eigenschaften der ausgerüsteten Fasermaterialien.

Es hat sich gezeigt, dass bei Verwendung erfindungsgemäßer Zusammensetzungen bei der ölund wasserabweisenden Ausrüstung den fertigen Textilien überdies ein angenehm weicher Griff verliehen werden kann.

Die Herstellung erfindungsgemäßer Zusammensetzungen kann durch die oben und in Anspruch 1 genannten Verfahrensschritte erfolgen. Dabei ist die angegebene Reihenfolge, nämlich zuerst a), dann b), dann c), einzuhalten. Verfahren, bei denen diese Reihenfolge a), b), c) nicht eingehalten wird, fallen nicht unter die vorliegende Erfindung. Führt man die Schritte a), b) und c) in einer anderen Reihenfolge durch, als oben angegeben, können erhebliche Nachteile der erhaltenen Produkte resultieren. Dies gilt insbesondere dann, wenn Schritt c) zeitlich vor Schritt b) oder Schritt b) zeitlich vor Schritt a) durchgeführt wird.

### Verfahrensschritt a):

In diesem Schritt wird ein fluorfreies mehrwertiges Isocyanat, d.h. eine Verbindung mit 2 oder mehr freien NCO-Gruppen, oder ein Gemisch solcher mehrwertigen Isocyanate mit einem fluorfreien einwertigen Alkohol oder einem Gemisch solcher Alkohole umgesetzt. Der fluorfreie einwertige Alkohol besitzt nur eine alkoholische Hydroxygruppe und enthält 10 bis 24, vorzugsweise 12 bis 22, Kohlenstoffatome. Bei der Umsetzung gemäß Verfahrensschritt a) müssen pro Äquivalent alkoholischer OH-Gruppen des Alkohols 2 bis 10, vorzugsweise 4 bis 8, Äquivalente an NCO-Gruppen des mehrwertigen Isocyanats eingesetzt werden. Dies bedeutet einen Unterschuß an alkoholischen OH-Gruppen, sodaß in dem entstehenden Produkt noch freie NCO-Gruppen vorliegen, von denen im Verfahrensschritt b), wie unten beschrieben, ein Teil durch Umsetzung mit Ketonoximen reversibel blockiert wird.

In Verfahrensschritt a) wie auch im später beschriebenen Verfahrensschritt c) entstehen durch Umsetzung von NCO-Gruppen mit OH-Gruppen Urethanbindungen, die weniger leicht reversibel sind als die in Schritt b) gebildeten Bindungen zwischen NCO-Gruppen und Ketonoximgruppen.

Verfahrensschritt a) kann nach bekannten Methoden zur Umsetzung von NCO-Gruppen mit alkoholischen OH-Gruppen erfolgen, wie sie aus der Urethanchemie dem Fachmann bekannt sind. Je nach Art der verwendeten Ausgangssubstanzen kann eine Reaktionstemperatur gewählt werden, die im Bereich zwischen Raumtemperatur und höherer Temperatur, z.B. 100°C, liegt, gegebenenfalls sind auch Reaktionstemperaturen bis 150°C möglich.

Es ist häufig von Vorteil, Verfahrensschritt a) in Gegenwart eines Katalysators oder Katalysatorgemischs durchzuführen. Geeignete Katalysatoren sind Alkoholate von Metallen. Besonders gut bewährt haben sich Titantetraalkylate oder Zinntetraalkylate wie z.B. Ti (C₂H₅O)₄. Gegebenenfalls können als Cokatalysatoren Trialkylamine, z.B. solche mit insgesamt 6 bis 12 Kohlenstoffatomen, mitverwendet werden. Der Katalysator muß nach Beendigung von Verfahrensschritt a) nicht aus dem entstehenden Produkt entfernt werden, seine Anwesenheit stört bei den nachfolgenden Verfahrensschritten b) und c) nicht.

Obwohl Verfahrensschritt a) in einer Reihe von Fällen ohne Verwendung eines Lösungsmittels durchgeführt werden kann, ist es bevorzugt, in einem organischen Lösungsmittel oder Lösungsmittelgemisch zu arbeiten. Als Lösungsmittel kommen organische Verbindungen in Betracht, die unter den Bedingungen der Umsetzung nicht mit NCO-Gruppen und alkoholischen OH-Gruppen reagieren. Ferner sollten die Lösungsmittel Siedepunkte von weniger als 200°C, vorzugsweise weniger als 150°C, aufweisen, damit deren spätere Entfernung, z.B. mittels Destillation nach Durchführung von Schritt c) erleichtert wird. Gut geeignet als Lösungsmittel sind Dialkylketone wie Methyl-isobutylketon oder Carbonsäureester wie Ethylacetat. Die verwendeten Lösungsmittel sollen im wesentlichen frei von Wasser sein, also höchstens geringe Mengen Wasser enthalten, damit praktisch keine Umsetzung von NCO-Gruppen mit Wasser stattfindet.

Das für Verfahrensschritt a) verwendete Lösungsmittel bzw. -gemisch muß anschließend an Schritt a) nicht entfernt werden. Vielmehr kann man auch die nachfolgenden Verfahrensschritte b) und c) in diesem noch anwesenden Lösungsmittel (-gemisch) ausführen, gegebenenfalls nach Hinzufügen eines weiteren Lösungsmittels. Erst nach Durchführung von Schritt c), gegebenenfalls erst nach Herstellung wässriger Dispersionen, welche das nach Schritt c) erhaltene Produkt enthalten, ist die Entfernung des Lösungsmittel (-gemischs) zweckmäßig.

Die in Verfahrensschritt a) verwendeten Alkohole müssen einige Bedingungen erfüllen, die nachfolgend beschrieben werden. Setzt man für diesen Schritt a) ein Gemisch von Alkoholen ein, so müssen alle dieser Alkohole diese Bedingungen erfüllen.

Zum einen ist der Alkohol einwertig, das heißt, er darf nicht mehr als eine alkoholische OH-Gruppe enthalten. Ferner enthält er keine Fluoratome. Er enthält 10 bis 24, vorzugsweise 12 bis 22, Kohlenstoffatome, besonders bevorzugt 14 bis 20 Kohlenstoffatome. Bevorzugt ist es, wenn der Alkohol keine alicyclischen oder aromatischen Reste enthält. Gut geeignet für das erfindungsgemäße Verfahren sind gesättigte oder einfach oder mehrfach ungesättigte Alkohole, die unverzweigt oder verzweigt sein können, oder Gemische der genannten Alkohole. Beispiele für gut geeignete Alkohole sind Stearylalkohol, Oleylalkohol, Cetylalkohol. Gute Ergebnisse werden ferner mit dem Produkt HD-Ocenol 70/75 V (Firma Henkel bzw. Cognis, DE) erhalten.

Das zweite Ausgangsprodukt für die Durchführung von Verfahrensschritt a) ist ein mehrwertiges Isocyanat, das 2 oder mehr NCO-Gruppen in freier Form enthält. Außerdem enthält das Isocyanat keine Fluoratome. An Stelle eines einzigen Isocyanats kann auch ein Gemisch von Isocyanaten verwendet werden. Alle in diesem Gemisch anwesenden Isocyanate müssen jedoch die oben genannten Bedingungen erfüllen.

Als Isocyanate werden bevorzugt Diisocyanate oder Triisocyanate oder Gemische davon verwendet, also Produkte mit 2 oder 3 NCO-Gruppen im Molekül. Im übrigen müssen die Isocyanate keine speziellen Anforderungen erfüllen. Es können aliphatische, acyclische oder alicyclische Isocyanate verwendet werden. Aber auch aromatische Gruppen enthaltende mehrwertige Isocyanate sind gut geeignet. Beispiele für geeignete Isocyanate finden sich in der US Patent Application Nr. 2002/0102382 A1 (Absätze 0011, 0012, 0013 und 0014 auf den Seiten 1 und 2).

Besonders gut geeignet für das zu erfindungsgemäßen Produkten führende Verfahren sind Toluylendiisocyanat (reine Isomere oder Isomerengemisch), aber auch Polymere, welche noch durchschnittlich mindestens 2 freie NCO-Gruppen im Molekül aufweisen. So ist beispielsweise für Schritt a) des Verfahrens ein polymeres Isocyanat besonders bevorzugt, das durch Umsetzung eines Toluylendiisocyanats mit 1.1.1-Trimethylolpropan und Diethylenglykol erhältlich ist und das noch durchschnittlich 2 oder mehr NCO-Gruppen im Molekül enthält. Ein solches Produkt ist unter der Bezeichnung "DESMODUR® L 75" (Firma Bayer, DE) auf dem Markt erhältlich. Ein anderes gut geeignetes Isocyanat ist das Produkt "DDI 1410-Diisocyanat" (Firma Cognis, USA), ein durch mehrere Alkylreste substituiertes Cyclohexan, wobei 2 dieser Alkylreste jeweils eine endständige NCO-Gruppe aufweisen.

Weitere geeignete mehrwertige Isocyanate finden sich in der Reihe der VESTANAT®-Typen (Degussa-Hüls, DE), z.B. VESTANAT IPDI, VESTANAT TMDI und VESTANAT B 370. Besonders gute Ergebnisse werden bei dem erfindungsgemäßen Verfahren in einer bevorzugten Ausführungsform erhalten, die dadurch gekennzeichnet ist, dass bei Schritt a) ein Gemisch von Isocyanaten eingesetzt wird, wobei eines dieser Isocyanate ein alicyclisches Isocyanat ist.

Dieses Gemisch kann z.B. aus einem polymeren Isocyanat, z.B. der oben genannten Art und einem alicyclischen Isocyanat bestehen, wobei das alicyclische Isocyanat ein substituiertes Cyclohexan der oben beschriebenen Art sein kann. Beide Typen von Isocyanaten müssen natürlich noch mindestens 2 freie NCO-Gruppen pro Molekül aufweisen. Vorzugsweise bildet das polymere Isocyanat den Hauptbestandteil des NCO-Gemischs, nämlich etwa 80 - 95 Gew%, während das alicyclische Isocyanat vorzugsweise zu 5 - 20 Gew% vorliegt. Es hat sich gezeigt, dass bei Verwendung eines solchen Gemischs den erhaltenen erfindungsgemäßen Zusammensetzungen, insbesondere in Form wässriger Dispersionen eine weiter erhöhte Lagerstabilität vermittelt werden kann, verglichen mit dem Fall, dass nur die polymeren Isocyanate allein verwendet werden.

### Verfahrensschritt b):

Wie oben erwähnt, kann auch dieser Schritt in Anwesenheit eines Lösungsmittels und/oder Katalysators durchgeführt werden, ebenso wie der weiter unten beschriebene Schritt c). Die Reaktionstemperatur kann, je nach verwendeten Produkten, zwischen Raumtemperatur und 90°C liegen, vorzugsweise liegt sie im Bereich von 45°C bis 85°C. Im übrigen sind die geeigneten Reaktionsbedingungen für Verfahrensschritt b) aus der Literatur über die reversible Blockierung von Isocyanatgruppen mittels Ketonoximen bekannt.

In Verfahrensschritt b) wird das nach Schritt a) erhaltene Produkt (-gemisch), das noch freie Isocyanatgruppen enthält, mit einem Ketonoxim umgesetzt. Hierbei wird ein Unterschuß von Oximgruppen gegenüber freien NCO-Gruppen verwendet, sodaß das nach Schritt b) erhaltene Produkt (-gemisch) wiederum noch freie Isocyanatgruppen enthält. Vorzugsweise erfolgt die Umsetzung so, dass in Verfahrensschritt b) pro Äquivalent an noch vorhandenen freien Isocyanatgruppen 0,2 bis 0,7, vorzugsweise 0,35 bis 0,65, Äquivalente an Oximgruppen verwendet werden. Durch die Umsetzung gemäß Verfahrensschritt b) wird ein Teil der anwesenden NCO-Gruppen in reversibler Weise blockiert. Diese Blockierung in Form einer Bindung zwischen Oximgruppen und NCO-Gruppen ist unter den Bedingungen der späteren Textilausrüstung reversibel, sodaß im Rahmen der üblichen Behandlung von textilen Flächengebilden NCO-Gruppen zurückgebildet werden, die dann für eine Umsetzung mit reaktiven Gruppen des Fasermaterials zur Verfügung stehen, z.B. OH-Gruppen von Cellulosefasern.

Geeignete Ketonoxime sind auf dem Markt erhältlich oder können in bekannter Weise aus den entsprechenden Ketonen durch Umsetzung mit Hydroxylamin hergestellt werden.

Geeignete Ketonoxime sind die Oxime von allen Ketonen, die keine zusätzlichen Gruppen enthalten, welche mit NCO-Gruppen reagieren, vorzugsweise von Ketonen der Formel R-CO-R', wobei R und R' unabhängig voneinander unsubstituierte Kohlenwasserstoffreste mit 1 bis 12 Kohlenstoffatomen bedeuten. R und R' können hierbei rein aliphatische, aromatische oder araliphatische Reste sein. Besonders gute Ergebnisse werden bei den erfindungsgemäßen Zusammensetzungen dann erhalten, wenn sowohl R als auch R' aliphatische, acyclische Reste mit 1 bis 8 Kohlenstoffatomen sind. Hervorragend geeignet sind beispielsweise Butanonoxim (Methyl-ethyl-ketonoxim) oder Methyl-isobutyl-ketonoxim.

### Verfahrensschritt c):

Das nach Verfahrensschritt b) erhaltene Produkt (-gemisch) enthält noch freie Isocyanatgruppen. Diese werden in Schritt c) mit einem fluorfreien organischen Amin, das zwei oder drei Hydroxygruppen enthält oder einem fluorfreien mehrwertigen Alkohol oder einem Gemisch solcher Verbindungen umgesetzt. Hierbei verwendet man solche Mengen der genannten Produkte, dass das nach Schritt c) erhaltene Produkt (-gemisch) frei oder im wesentlichen frei von Isocyanatgruppen ist, d.h. einander in etwa äquivalente Anteile an NCO-Gruppen einerseits und alkoholischen OH-Gruppen andererseits. Die Abwesenheit von NCO-Gruppen lässt sich in einfacher und bekannter Weise mittels IR-Spektroskopie feststellen.

Gut geeignet als Amine für die Umsetzung mit den freien Isocyanatgruppen gemäß Verfahrensschritt c) sind Amine, welche einen, vorzugsweise jedoch zwei oder drei, organische Reste an ein Stickstoffatom gebunden enthalten. Diese Reste müssen insgesamt zwei oder drei OH-Gruppen als Substituenten aufweisen. Vorzugsweise sind an das Stickstoffatom zwei oder drei aliphatische Reste R mit jeweils 2 bis 6 Kohlenstoffatomen gebunden, von denen jeder eine Hydroxygruppe, vorzugsweise eine endständige Hydroxygruppe, enthält. Falls nur zwei solcher Reste an das Stickstoffatom gebunden sind, kann der dritte Substituent am Stickstoff ein Wasserstoffatom sein oder eine unsubstituierte Alkylgruppe mit 1 bis 4 Kohlenstoffatomen. Bevorzugt ist dieser dritte Substituent Wasserstoff oder eine Methylgruppe.

Die an das Stickstoffatom gebundenen Reste können weitere Heteroatome enthalten wie Sauerstoff, Stickstoff oder Silicium.

Besonders gute Ergebnisse werden erhalten, wenn in Schritt c) als Amin N-Methyldiethanolamin oder Triethanolamin oder ein Gemisch dieser Amine eingesetzt wird.

Wird für Verfahrensschritt c) nicht ein Amin, sondern ein mehrwertiger Alkohol eingesetzt, so sind Alkohole mit zwei oder drei alkoholischen OH-Gruppen bevorzugt. Es ist möglich, aromatische mehrwertige Alkohole bzw. Phenole einzusetzen, z.B. Dihydroxybenzole oder Trihydroxybenzole. Bevorzugt jedoch verwendet man aliphatische alicyclische Diole oder Triole mit 2 bis 8 Kohlenstoffatomen, z.B. Ethylenglykol, Diethylenglykol, 1.2- oder 1.3-Propylenglykol, oder Gemische, welche mehrere solcher Alkohole enthalten oder Gemische, welche einen oder mehrere solcher Alkohole und eines oder mehrere der oben genannten Amine enthalten.

Die erfindungsgemäßen Zusammensetzungen eignen sich vor allem als Extender bei der ölund wasserabweisenden Ausrüstung von textilen Flächengebilden mittels Polymeren, welche Perfluoralkylgruppen (R_{F}) enthalten. Da diese Ausrüstungen üblicherweise mit wässrigen Dispersionen durchgeführt werden, besteht eine bevorzugte Ausführungsform erfindungsgemäßer Zusammensetzungen darin, dass sie in Form einer wässrigen Dispersion vorliegen, welche einen oder mehrere Dispergatoren enthält. Vorzugsweise ist mindestens einer der verwendeten Dispergatoren kationaktiv.

Gut geeignet als Dispergatoren sind bekannte nichtionogene oberflächenaktive Produkte wie ethoxilierte Fettalkohole oder ethoxilierte Fettsäuren, insbesondere in Kombination mit kationaktiven Tensiden. Als kationaktive Dispergatoren sind vor allem quaternäre Ammoniumsalze geeignet. Diese können allein oder in Kombination mit den oben genannten nichtionogenen Dispergatoren verwendet werden. Beispiele für geeignete handelsübliche kationische Dispergatoren sind die dem Fachmann bekannten Tetraalkyl-ammoniumchloride, wobei mindestens einer der 4 Alkylreste mehr als 10 Kohlenstoffatome enthält, oder Tetraorganoammoniumchloride, welche neben mindestens einem längerkettigen Alkylrest noch einen oder mehrere Polyoxyethylenreste an Stickstoff gebunden enthalten.

Zur Herstellung wässriger Dispersionen von erfindungsgemäßen Zusammensetzungen eignen sich Methoden, die dem Fachmann gut bekannt sind. Man kann beispielsweise zuerst eine wässrige Lösung des Dispergators oder Dispergatorgemischs herstellen und in diese Lösung die erfindungsgemäße Zusammensetzung einrühren, gegebenenfalls bei erhöhter Temperatur. Daran kann sich, falls erforderlich, eine mechanische Homogenisierung anschließen. Enthält die hierfür verwendete erfindungsgemäße Zusammensetzung noch organisches Lösungsmittel, so ist es vielfach zweckmäßig, dieses erst nach Herstellung der wässrigen Dispersion zu entfernen, nämlich vor allem dann, wenn die lösungsmittelfreie erfindungsgemäße Zusammensetzung wegen zu hoher Viskosität schlecht handhabbar ist.

Die wässrigen Dispersionen erfindungsgemäßer Zusammensetzungen enthalten bevorzugt 5 bis 50 Gew% an erfindungsgemäßer Zusammensetzung, wie sie nach Durchführung von Verfahrensschritt c) erhalten wurde, und 2 bis 10 Gew% an Dispergator oder Dispergatorgemisch. Diese Werte beziehen sich auf Dispersionen, aus denen ein gegebenenfalls enthaltenes organisches Lösungsmittel vorher entfernt worden war, z.B. mittels Destillation.

In einer Reihe von Fällen ist es vorteilhaft, den wässrigen Dispersionen eine Säure hinzuzufügen, um den pH-Wert auf einen Wert im sauren Bereich einzustellen, z.B. im Bereich von 1,5 bis 5. Geeignet hierfür sind anorganische Säuren wie Salzsäure, Schwefelsäure oder Phosphorsäure, oder niedrigmolekulare Carbonsäuren wie Essigsäure.

Wie erwähnt, können erfindungsgemäße Zusammensetzungen in Kombination mit Perfluoralkylgruppen enthaltenden Polymeren vorteilhaft für die öl- und wasserabweisende Ausrüstung von Fasermaterialien verwendet werden und wirken dabei als Extender. Die Fasermaterialien sind vorzugsweise textile Flächengebilde in Form von Geweben, Gewirken oder Vliesen (nonwovens) und können z.B. aus Cellulosefasern, z.B. Baumwolle, Polyester, Polyamid oder Fasermischungen bestehen. Sie dienen in erster Linie zur Herstellung von Endartikeln, bei denen öl- und/oder wasserabweisende Eigenschaften erwünscht sind wie z.B. wetterfeste Bekleidung, Markisen, Tischdecken, Möbelbezugsstoffe, Zeltleinwände usw.

Die Ausrüstung der Textilien kann nach Verfahren erfolgen, wie sie dem Fachmann bekannt sind, z.B. über Foulardierung bei üblichen Flottenkonzentrationen und nachfolgende Trocknung. Gegebenenfalls schließt sich noch eine Kondensation nach üblichen Methoden bei höheren Temperaturen an.

Die Kombination erfindungsgemäßer Zusammensetzungen mit den R_{F}-Gruppen enthaltenden Polymeren kann nach mehreren Methoden erfolgen:
a) Man stellt, wie oben beschrieben, eine wässrige Dispersion erfindungsgemäßer Zusammensetzungen her, entfernt gegebenenfalls anwesendes organisches Lösungsmittel durch Destillation und gibt zu der erhaltenen Dispersion das Fluor enthaltende Polymer in unverdünnter Form. Diese Methode ist jedoch weniger bevorzugt und überhaupt nur dann zweckmäßig, wenn das Polymer flüssig und nicht hochviskos ist.
b) Man verfährt wie unter a) mit dem Unterschied, dass das Fluor enthaltende Polymer nicht unverdünnt zugegeben wird, sondern in Form einer wässrigen Dispersion oder in Form einer Lösung in einem organischen Lösungsmittel oder Lösungsmittelgemisch.

Anschließend an Methode a) oder b) kann gegebenenfalls eine mechanische Homogenisierung und gegebenenfalls eine Entfernung von organischem Lösungsmittel erfolgen.

Vorzugsweise enthalten die so hergestellten wässrigen Dispersionen pro Gewichtsteil an erfindungsgemäßer Zusammensetzung 1 bis 4 Gewichtsteile an dem Polymeren mit Perfluoralkylgruppen. Diese Werte beziehen sich auf erfindungsgemäße Zusammensetzungen, wie sie nach Verfahrensschritt c) erhalten werden, d.h. auf wasser- und lösungsmittelfreie erfindungsgemäße Zusammensetzungen und auf Perfluoralkylgruppen (R_{F}) enthaltende Polymere als solche, d.h. ebenfalls wasser- und lösungsmittelfreie Produkte.

Die genannten wässrigen Dispersionen enthalten bevorzugt 40 bis 80 Gew% Wasser, die Summe aus erfindungsgemäßer Zusammensetzung und Fluorpolymer (beide als wasser- und lösungsmittelfreie Produkte berechnet) beträgt vorzugsweise 15 bis 55 Gew%. Außerdem enthalten die wässrigen Dispersionen noch, wie oben erwähnt, einen oder mehrere Dispergatoren. Zur Erzielung spezieller Effekte können sie zusätzlich weitere Produkte enthalten wie Silikone als Weichgriffmittel, Flammschutzmittel oder Cellulosevernetzer. In diesem Fall können die prozentualen Anteile an Fluorpolymer und erfindungsgemäßer Zusammensetzung etwas niedriger liegen als die oben als bevorzugt angegebenen Bereiche.

Die Perfluoralkylgruppen enthaltenden Polymere, die in Kombination mit erfindungsgemäßen Zusammensetzungen für die Textilausrüstung verwendet werden können, sind dem Fachmann bekannt. Eine Reihe solcher Polymerer ist auf dem Markt in Form wässriger Dispersionen erhältlich, z.B. die Produkte OLEOPHOBOL® (Firma Ciba Spezialitätenchemie Pfersee GmbH, DE), oder die Produkte ZONYL® (Firma DuPont).

Die Perfluoralkylreste (R_{F}) enthaltenden Polymeren sind Polymere, die einen oder mehrere Perfluoralkylreste (R_{F}) im Molekül enthalten. Die Reste R_{F} sind bevorzugt lineare einwertige Reste der Formel 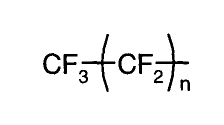 wobei n durchschnittlich einen Wert von 3 bis 23, bevorzugt von 7 bis 19, aufweist. Die einzelnen Moleküle des Polymeren können sich im Wert von n unterscheiden, sodaß das verwendete Polymer im Normalfall ein Gemisch von Verbindungen ist, die sich außer im Polymerisationsgrad auch noch in der Kettenlänge des Perfluoralkylrestes R_{F} unterscheiden. Besonders gut geeignet sind R_{F}-Gruppen enthaltende Polyacrylate oder Polymethacrylate, die sich von Monomeren der Formel 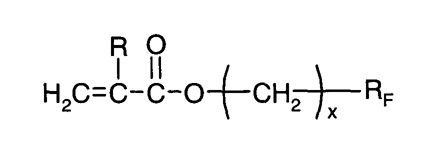 ableiten, wobei R für H oder CH₃ und
x für eine Zahl von 2 bis 6, vorzugsweise für 2,
steht.

Eine weitere Gruppe bevorzugter R_{F}-Gruppen enthaltender Polymerer sind Polyurethane, die sich durch Umsetzung von mehrwertigen Isocyanaten, vorzugsweise Diisocyanaten, mit R_{F}-Gruppen enthaltenden mehrwertigen Alkoholen, vorzugsweise Diolen, erhalten lassen.

Geeignete Perfluoralkylgruppen enthaltende Polymere und ihre Herstellung sind ferner beschrieben in US 4 054 592, US 3 968 066, EP-A 348 350, EP-A 459 125, EP-A 537 578 und EP-A 325 918.

Die Erfindung wird nunmehr durch Ausführungsbeispiele veranschaulicht.

Soweit in den folgenden Beispielen von "Unterschuß" die Rede ist, ist damit ein äquivalenter Unterschuß im Vergleich zu anwesenden freien NCO-Gruppen gemeint.

### Beispiel 1 (erfindungsgemäß)

a) Herstellung einer erfindungsgemäßen Zusammensetzung
   450 g eines polymeren Polyisocyanats
      (DESMODUR L75, wie oben beschrieben)
      und
   60 g eines alicyclischen Diisocyanats
      (DDI 1410 - Diisocyanat, wie oben beschrieben)
   wurden bei 60°C unter Rühren in
   520 g Methyl-isobutyl-keton
   gelöst.
   Man gab einen Unterschuß an
   HD-Ocenol 70/75 V
   (Gemisch aus Cetylalkohol und Oleylalkohol mit einer Jodzahl von 70 - 75)
   und
   10 ml 10 %ige Lösung von (C₂H₅O)₄ Ti in Methyl-isobutyl-keton
   und
   1 ml 10 %ige Lösung von Triethylamin in Methyl-isobutyl-keton
   zu und rührte 1 Stunde bei etwa 60°C.
   Anschließend wurde bei dieser Temperatur ein Unterschuß an
   Methyl-ethylketonoxim (Butanonoxim)
   zugegeben und 75 Minuten bei 75°C gerührt.
   Schließlich gab man eine Lösung von
   N-Methyl-diethanolamin in
   23 g Methyl-isobutylketon
   zu und rührte noch 1 Stunde bei etwa 85°C.
   Die Menge an N-Methyl-diethanolamin war hierbei so bemessen, dass sie der Menge an noch vorhandenen freien NCO-Gruppen in etwa äquivalent war.
   Das erhaltene Produkt zeigte im IR-Spektrum kein NCO-Signal mehr.
   Man gab 26 g Silikon Öl L 080 (Fa. Wacker, DE) zu. Das so erhaltene Produktgemisch wird nachfolgend als "Gemisch 1" bezeichnet.
b) Herstellung einer wässrigen Dispersion von Gemisch 1
   1280 g Gemisch 1 wurden in einer wässrigen Lösung unter gründlicher, mechanischer Homogenisierung bei 30°C dispergiert.
   Diese wässrige Lösung enthielt
   1650 g Wasser,
   67 g eines Gemischs von nichtionogenen und kationaktiven Dispergatoren
   und
   110 g Propylenglykol.
   Nach Einstellung des pH-Werts auf einen Wert von etwa 3 mit Salzsäure und nochmaliger mechanischer Homogenisierung erhielt man eine leicht viskose Dispersion, aus der das anwesende Methyl-isobutylketon unter vermindertem Druck abdestilliert wurde. Es resultierte eine stabile Dispersion, die auch nach längerer Lagerung keine Abscheidungen zeigte. Vor den unten beschriebenen Ausrüstversuchen wurden der Dispersion nochmals 200 g Wasser und 73 g eines Dispergators (Umsetzungsprodukt aus Diglycidether mit aliphatischem Diamin) hinzugefügt.

### Beispiel 2 (erfindungsgemäß)

a) Herstellung einer erfindungsgemäßen Zusammensetzung
   112 g DESMODUR L75
   15 g DDI 1410-Diisocyanat
   wurden bei Raumtemperatur in
   130 g Methyl-isobutylketon
   gelöst. Dann gab man einen Unterschuß an
   Octadecylalkohol
   zu und rührte 90 Minuten bei etwa 85°C. Anschließend wurde ein Unterschuß
   an Butanonoxim zugegeben
   und 10 Minuten bei etwa 75°C gerührt.
   Dann gab man eine Lösung von
   N-Methyldiethanolamin
   in
   12 g Methyl-isobutylketon
   zu und rührte 180 Minuten bei 65°C. Man ließ über Nacht stehen und rührte dann nochmals 80 Minuten. Die Prüfung mittels IR-Spektroskopie zeigt kein NCO-Signal mehr.
   Es wurden
   6,5 g Silikonöl (wie in Beispiel 1) zugegeben. Das erhaltene Gemisch wird nachfolgend als "Gemisch 2" bezeichnet.
b) Herstellung einer wässrigen Dispersion einer erfindungsgemäßen Zusammensetzung
   155 g Gemisch 2
   wurden in einer wässrigen Lösung dispergiert. Diese wässrige Lösung enthielt
   315 g Wasser
   16,5 g Dispergatorgemisch (wie in Beispiel 1)
   27 g Propylenglykol.
   Die Dispergierung erfolgte unter mechanischer Homogenisierung bei 30°C. Anschließend wurde durch Zugabe von Essigsäure ein pH-Wert von etwa 4,5 eingestellt. Man erhielt eine Dispersion, aus der mittels Destillation unter vermindertem Druck das anwesende Methyl-isobutylketon entfernt wurde. Die resultierende wässrige Dispersion war von guter Qualität und wies gute Stabilität auch nach längerer Lagerung auf. Zu dieser Dispersion gab man noch 130 g Wasser und 16 g des Dispergators auf Basis Diglycidylether (s. Beispiel 1).

### Beispiel 3 (erfindungsgemäß)

### Ausrüstversuche

Jeweils etwa 2 Gew.teile der gemäß den Beispielen 1 und 2 erhaltenen Dispersionen wurden mit jeweils etwa 4 bis 5 Gew.teilen einer wässrigen Dispersion vereinigt, welche etwa 25 Gew% eines Polymeren mit Perfluoralkylgruppen (OLEOPHOBOL = R_{F}-Polyacrylat der Firma Ciba Spezialitätenchemie GmbH, DE bzw. in einem anderen Versuch ZONYL der Firma DuPont, ebenfalls ein R_{F}-Polyacrylat) enthielt.
Aus den so erhaltenen Dispersionen wurden Foulardierungsflotten mit üblichen Konzentrationen hergestellt und mit diesen wurden Textilgewebe ausgerüstet und getrocknet. Die ausgerüsteten Gewebe zeigten angenehm weichen Griff und sehr gute wasser- und ölabweisende Eigenschaften.

### Beispiel 4 (nicht erfindungsgemäßes Vergleichsbeispiel)

Bei diesem Beispiel wurde Verfahrensschritt b) von Anspruch 1 (Blockierung mittels Ketonoxim) nicht durchgeführt
112 g DESMODUR L75
15 g DDI-1410-Diisocyanat
wurden bei 60°C in
130 g Methyl-isobutylketon
gelöst. Dann wurde ein Unterschuß
HD-Ocenol 70/75
(Mischung von Cetyl- und Oleylalkohol)
und
1,5 ml 10 %ige Lösung von Ti(C₂H₅O)₄ in Methylisobutylketon
0,25 ml 10 %ige Lösung von Triethylamin in Methylisobutylketon
hinzugefügt und die Mischung 1 Stunde bei 60°C gerührt.
Nach Hinzufügen einer Lösung von
5 g N-Methyldiethanolamin in
12 g Methyl-isobutyketon
wurde 45 Minuten bei 60°C gerührt.
Man erhielt ein Produkt von gummiartiger Konsistenz, das für eine Weiterverarbeitung (Dispergierung in Wasser) ungeeignet war. Da das Produkt somit auch einer Blockierung mittels Ketonoxim nicht mehr zugänglich war, ist dieses Beispiel ein Beweis dafür, dass die Reihenfolge der Verfahrensschritte a), b), c) eingehalten werden muß.

### Beispiel 5 (nicht-erfindungsgemäßes Vergleichsbeispiel)

Bei diesem Beispiel wurde weder ein Verfahrensschritt a) (Umsetzung mit Monoalkohol) noch ein Verfahrensschritt b) (Blockierung mit Ketonoxim) durchgeführt.
112 g DESMODUR L75
15 g DDI-1410-Diisocyanat
wurden bei 60°C in
130 g Methyl-isobutylketon gelöst.
Anschließend wurden
4,8 g N-Methyldiethanolamin, gelöst in
12 g Methyl-isobutylketon
und
1,5 ml Ti(C₂H₅O)₄-Lösung wie in Beispiel 4
0,25 ml N(C₂H₅)₃-Lösung wie in Beispiel 4
hinzugefügt und die Mischung 100 Minuten bei 60°C gerührt. Nach Lagerung (15 Stunden) wurde ein Produkt mit gummiartiger Konsistenz erhalten, das für eine Weiterverarbeitung ungeeignet war.

## Patentansprüche

1. Zusammensetzung, herstellbar durch folgende, nacheinander ablaufende Verfahrensschritte:
a) Umsetzung eines fluorfreien, mehrwertigen Isocyanats mit 2 oder mehr NCO-Gruppen im Molekül oder eines Gemischs solcher Isocyanate mit einem fluorfreien einwertigen Alkohol mit 10 bis 24, vorzugsweise 12 bis 22, Kohlenstoffatomen, oder einem Gemisch solcher Alkohole, wobei pro Äquivalent OH-Gruppen des Alkohols 2 bis 10, vorzugsweise 4 bis 8, Äquivalente an NCO-Gruppen eingesetzt werden.
b) Umsetzung des bei Schritt a) erhaltenen Produkts mit einem Ketonoxim in solchen Mengenverhältnissen, dass in dem entstehenden Produktgemisch noch freie Isocyanatgruppen vorliegen.
c) Umsetzung des bei Schritt b) erhaltenen Produktgemischs mit einem fluorfreien organischen Amin, das zwei oder drei Hydroxygruppen enthält oder einem fluorfreien mehrwertigen Alkohol oder einem Gemisch solcher Verbindungen in solchen Mengenverhältnissen, dass das entstehende Produkt im wesentlichen frei von Isocyanatgruppen ist.

2. Zusammensetzung nach Anspruch 1, **dadurch gekennzeichnet, dass** einer oder mehrere der Verfahrensschritte a), b) und c), insbesondere Verfahrensschritt a), in einem im wesentlichen wasserfreien Lösungsmittel durchgeführt werden.

3. Zusammensetzung nach Anspruch 1 oder 2, **dadurch gekennzeichnet, dass** in Schritt a) ein polymeres Isocyanat verwendet wird, das durch Umsetzung eines Toluylendiisocyanats mit 1.1.1-Trimethylolpropan und Diethylenglykol erhältlich ist und das noch durchschnittlich 2 oder mehr NCO-Gruppen im Molekül enthält.

4. Zusammensetzung nach einem oder mehreren der Ansprüche 1 bis 3, **dadurch gekennzeichnet, dass** in Verfahrensschritt b) pro Äquivalent an noch vorhandenen freien Isocyanatgruppen 0,2 bis 0,7, vorzugsweise 0,35 bis 0,65, Äquivalente an Oximgruppen verwendet werden.

5. Zusammensetzung nach einem oder mehreren der Ansprüche 1 bis 4, **dadurch gekennzeichnet, dass** in Schritt c) als Amin N-Methyldiethanolamin oder Triethanolamin oder ein Gemisch dieser Amine eingesetzt wird.

6. Zusammensetzung nach einem oder mehreren der Ansprüche 1 bis 5, **dadurch gekennzeichnet, dass** bei Schritt a) ein Gemisch von Isocyanaten eingesetzt wird, wobei eines dieser Isocyanate ein alicyclisches Isocyanat ist.

7. Wässrige Dispersion, welche eine Zusammensetzung gemäß einem oder mehreren der Ansprüche 1 bis 6 und einen oder mehrere Dispergatoren enthält.

8. Dispersion nach Anspruch 7, **dadurch gekennzeichnet, dass** sie mindestens einen kationaktiven Dispergator enthält.

9. Verwendung einer Dispersion nach Anspruch 7 oder 8 in Kombination mit einem Polymeren, das Perfluoralkylgruppen enthält, zur Behandlung von Fasermaterialien.

10. Verwendung nach Anspruch 9, **dadurch gekennzeichnet, dass** die Fasermaterialien textile Flächengebilde in Form von Geweben, Gewirken oder Vliesen (nonwovens) sind.
